# EUROPEAN PATENT APPLICATION

(11) **EP 4 672 539 A1**
(43) Date of publication of application: **31.12.2025**
(21) Application number: 24185208.6
(22) Date of filing: 28.06.2024
(51) Int. Cl.: H02J 3/36, H02J 1/14, H02J 3/00, H02J 3/28, H01H 33/59, H02H 7/26

(54) **ENERGY STORAGE DEVICES FOR HIGH VOLTAGE DIRECT CURRENT (HVDC) TRANSMISSION SYSTEMS**

(71) Applicant: Hitachi Energy Ltd, 8050 Zürich (CH)
(72) Inventor: KANNAN, Vinothkumar, 600128 Chennai (IN); AVINASH REDDY, Govind, 501504 Hyderabad (IN)
(74) Representative: Epping - Hermann - Fischer

(57) **Abstract**

The present disclosure proposes energy storage device (100) for supporting energy requirement in HVDC transmission system and for limiting fault current during dc-side fault event. Energy storage device (100) is connectable in series to first and second HVDC converter stations of HVDC transmission system through first and second device ends (102-1, 102-2), respectively. Energy storage device (100) comprises control unit (106) and one or more cells (104) electrically cascaded between first and second device ends (102-1, 102-2). Each cell (104) comprises switch assemblies arranged in full-bridge configuration, first and second cell input/output (I/O) ends connected respectively between first and second switch assemblies and third and fourth switch assemblies, and energy storage element connected at one end between the second and fourth switch assemblies and at other end between the first and third switch assemblies. Control unit (106) independently controls switch assemblies to control flow of current through energy storage element.

## Description

### TECHNICAL FIELD

The present subject matter relates, in general, to an energy storage device. In particular, the present subject matter relates to an energy storage device for a high voltage direct current (HVDC) transmission system.

### BACKGROUND

Power systems are generally utilized for generation and distribution of power. During the generation and distribution of the power, conventional power systems typically utilized synchronous machines having rotary parts. In case of any faults and/or disturbances within the power systems, the rotary parts continued to rotate due to inertia and release kinetic energy, thereby acting as energy buffers for a certain amount of time until remedial measures were initiated for countering the faults and/or disturbances. Thus, at the time of occurrence of the faults and/or the disturbances within the power systems, any additional inertia support was not needed, and the synchronous machines were able to contribute to stability within the conventional power systems.

However, as the interest in renewable energy is increasing and renewable energy sources, such as wind energy and solar energy, are being utilized for the generation of power, the use of the synchronous machines in the power system is declining. As a result, the stability which was traditionally provided by the synchronous machines within the conventional power systems is required to be provided by other means like additional energy storage devices, such as super capacitors and/or batteries. Further, due to integration of large number of power electronic devices based renewable energy source into the power systems and due to the unpredictable nature of the renewable energy source generation, energy storage devices are becoming even more essential to provide inertia support in case of any faults and/or disturbances within the power systems.

### BRIEF DESCRIPTION OF FIGURES

The following detailed description of the present subject matter is better understood when read in conjunction with the appended figures. For the purpose of illustrating the present subject matter, exemplary constructions of the present subject matter are shown in the figures. However, the present subject matter is not limited to the specific process and structures disclosed herein. The use of the same reference number in different figures indicates similar or identical features and components.
FIG. 1A illustrates a schematic representation of an energy storage device, according to an example.
FIG. 1B illustrates a schematic representation of cells of the energy storage device of FIG. 1A, according to an example.
FIG. 2A illustrates an HVDC transmission system with the energy storage device positioned according to an example.
FIG. 2B illustrates an HVDC transmission system with the energy storage device positioned according to another example.
FIG. 2C illustrates an HVDC transmission system with the energy storage device positioned according to yet another example.
FIG. 3 illustrates a schematic representation of a cell of the energy storage device, according to an example.
FIG. 4 illustrates a schematic representation of an energy storage element of the cell, according to an example.
FIG. 5A illustrates a schematic representation of a multiterminal HVDC transmission system equipped with hybrid HVDC breakers, according to an example.
FIG. 5B illustrates a schematic representation of a hybrid HVDC breaker, according to an example.
FIG. 5C illustrates a schematic representation of flow of current through cells within the hybrid HVDC breaker of FIG. 5B during a dc-side fault event, according to an example.
FIG. 6A illustrates exemplary simulation results indicating performance of the energy storage device in the HVDC transmission system of FIG. 2A during transmission of power in a first direction, according to an example.
FIG. 6B illustrates exemplary simulation results indicating performance of the energy storage device in the HVDC transmission system of FIG. 2A during transmission of power in a second direction opposite to the first direction, according to an example.
FIG. 7 illustrates exemplary simulation results indicating performance of the energy storage device as a part of the hybrid HVDC breaker in the HVDC transmission system of FIG. 5A during the dc-side fault event, according to an example.

### DETAILED DESCRIPTION

Modem power systems utilize various techniques for power transmission. For instance, voltage source converter (VSC) based high voltage direct current (HVDC) transmission may be typically used for grid interconnections, city infeed's, and power from renewable energy sources. HVDC transmission also enables bulk integration of remote renewable energy source-based power generation units like wind, solar, etc., both onshore and offshore to alternating current (AC) grids. HVDC transmission systems include HVDC converters which are connected to each other via an HVDC transmission line. The HVDC transmission line may be understood to include one or more transmission lines, one or more transmission cables, or a combination thereof to connect the HVDC converters to each other. Typically, in a point-to-point HVDC transmission system, dc-sides of two HVDC converters are connected to each other via the HVDC transmission line. Both the HVDC converters may act either as a rectifier or as an inverter based on the direction of flow of power between the HVDC converters. However, the HVDC converters and the HVDC transmission line do not store significant energy for providing the inertia support in case of any faults and/or disturbances within the AC power systems.

Thus, typically, HVDC transmission systems are equipped with energy storage devices for providing inertia support during faults and/or disturbances within the AC power systems. In an approach, an energy storage device maybe connected to the HVDC transmission line in a shunt connection on a dc-side. However, since the energy storage device is connected in a shunt connection to the HVDC transmission link, DC voltage blocking is required to be implemented by the energy storage device to prevent the current from flowing towards the energy storage device and enable power transmission from the energy storage device to the HVDC converter through the HVDC transmission line during the faults and/or the disturbances within the AC power systems.

For DC voltage blocking, many components of the energy storage device are utilized to maintain a voltage equal to pole voltage of the HVDC transmission system. The remaining components of the energy storage device are utilized to actually provide the inertia support. Thus, the components that are used for the DC voltage blocking are under-utilized and do not actually contribute to the inertia support. Due to large number of components, energization time of the energy storage device is very high. Moreover, such an energy storage device has high cost and footprint.

Further, the energy storage device typically utilizes a pre-insertion resistor (PIR) to limit the inrush current within current rating of the energy storage device during charging of the energy storage device. The PIR may be placed on the AC side of the HVDC converter and/or the DC side of the HVDC converter. The PIR on the DC side reduces the energization time of the conventional energy storage device. However, due to large number of components of the energy storage device, PIR sizing is too high on the AC side and the DC side. As a result, the energy dissipated by the PIR as heat is also very high. This means that a large amount of energy is used up by the PIR for limiting the inrush current within the current rating of the energy storage device. Thus, there is a need for energy storage devices which provide the required inertia support to the AC power system with a smaller number of components than typical approaches of providing the inertia support.

An energy storage device for supporting energy requirement in a high voltage direct current (HVDC) transmission system is now described. The energy storage device of the present subject matter has considerably lesser number of components as compared to components utilized in the typical approaches for providing the inertia support using typical energy storage devices. In one example, the energy storage device of the present subject matter comprises a first device end, a second device end, and one or more cells electrically cascaded between the first device end and the second device end. The first device end may be electrically connectable in series to a first HVDC converter station of the HVDC transmission system. The second device end may be electrically connectable in series to a second HVDC converter station of the HVDC transmission system via an HVDC transmission line. The HVDC transmission line may be understood to include one or more transmission lines, one or more transmission cables, or a combination thereof.

Each cell of the one or more cells may comprise switch assemblies, a first cell input/output (I/O) end, a second cell I/O end, and an energy storage element. The switch assemblies may be arranged in a full-bridge configuration. The first cell I/O end may be electrically connected to a first end of a first switch assembly of the switch assemblies and a second end of a second switch assembly of the switch assemblies. Further, the second cell I/O end may be electrically connected to a first end of a third switch assembly of the switch assemblies and a second end of a fourth switch assembly of the switch assemblies.

The energy storage element may have a first element end and a second element end. The first element end may be electrically connected to a first end of the second switch assembly and a first end of the fourth switch assembly. Further, the second element end may be electrically connected to a second end of the first switch assembly and a second end of the third switch assembly. The energy storage device may further comprise a control unit configured to independently control the switch assemblies to control flow of current through the energy storage element. The configuration of the energy storage device of the present subject matter is such that the energy storage device is connectable in series between the first HVDC converter station and the second HVDC converter station via the HVDC transmission line. As the energy storage device is connectable in series between the first HVDC converter station and the second HVDC converter station, the energy storage device is not required to implement the DC voltage blocking. The described energy storage device thus does not require extra components for the purpose of the DC voltage blocking. As a result, the energy storage device of the present subject matter has considerably lesser number of components as compared to typical energy storage devices utilized for providing the inertia support.

In an example, one of the first device end and the second device end may act as an input of the energy storage device while the other end may act as an output of the energy storage device based on the direction of current flowing between the first HVDC converter station and the second HVDC converter station. The described energy storage device has a symmetrical configuration. As a result, the energy storage device is able to operate in a similar manner irrespective of the direction of the current flowing between the first HVDC converter station and the second HVDC converter station.

In an example, the energy storage element may comprise a predetermined number of storage element strings. The predetermined number of storage element strings may be connected to each other in parallel. Further, each storage element string may comprise a pre-determined number of super-capacitors and/or batteries that may be connected in series.

Each cell of the energy storage device may be operated independently in an idle mode, an energy support mode, and an energization mode. In the idle mode, the energy storage element within the energy storage device may not exchange any power with the HVDC transmission system. Thus, in the idle mode, the energy storage element neither transmits any stored energy nor receives any energy for storage. In the energy support mode, the energy storage element within the energy storage device may transmit stored energy to the HVDC transmission system for providing inertia support to the AC power system. The cell may be operated in the energy support mode during any faults and/or disturbances in the AC power system. In the energization mode, the energy storage element within the energy storage device may receive energy for charging from the HVDC transmission system.

In an example, the cell may operate in a blocked state during a dc-side fault event in the HVDC transmission system. For operating the cell in the blocked state, the control unit may control the switch assemblies to allow fault current to flow, between the first cell I/O end and the second cell I/O end, through the energy storage element and the first one-directional switch of two switch assemblies of the switch assemblies. The energy storage element may limit and commutate the fault current to a main breaker in the blocked state. For operating the cell in the blocked state, the control unit may operate the second one-directional switch of each switch assembly of the switch assemblies in the open state. Thus, in addition to providing the inertia support during disturbances and faults in the HVDC transmission system, the energy storage device of the present subject matter also provides resistance against the fault current without damaging until other remedial actions are taken, for example, until AC breakers are opened.

In an example, in the HVDC transmission system, the energy storage device of the present subject matter is connectable near the first HVDC converter station and/or near the second HVDC converter station. Wherever the energy storage device is connected, the energy storage device would be able to provide energy support to the first HVDC converter and/or the second HVDC converter station when required.

In an example, the HVDC transmission system comprises a hybrid HVDC breaker. The hybrid HVDC breaker may be electrically connected in series between the first HVDC converter station and the second HVDC converter station via the HVDC transmission line. The hybrid HVDC breaker may comprise a current control assembly and a main breaker. The current control assembly may comprise the energy storage device and an ultra-fast disconnector. The ultra-fast disconnector may be electrically connected in series to the energy storage device. The main breaker may be connected in parallel to the current control assembly.

During normal energy transmission operation, the ultra-fast disconnector may operate in a closed state and the energy storage device may operate in the idle mode to allow current to flow between the first HVDC converter station and the second HVDC converter station though the current control assembly and the HVDC transmission line.

During the dc-side fault event in the HVDC transmission system, for a predefined time period after initiation of the dc-side fault event, the ultra-fast disconnector may operate in the closed state and the energy storage device may operate in the blocked state for inserting voltage against the fault current to commutate the fault current from the current control assembly to the main breaker. Further, when the fault current flowing through the current control assembly becomes zero, after the predefined time period, the ultra-fast disconnector may switch from the closed state to an open state. The fault current may then be damped and the fault may be disconnected.

The energy storage device of the present subject matter is connected in series between the first HVDC converter station and the second HVDC converter station via HVDC transmission line/cable. Thus, the energy storage device is not required to implement the DC voltage blocking. That is, the energy storage device does not require cells specifically for providing power with voltage equal to the pole voltage of the HVDC transmission system. Thus, the energy storage element within the energy storage device can be fully utilized for providing inertia support during any fault and/or disturbance in the AC power systems at the first HVDC converter side and/or the second HVDC converter side. Since the energy storage device does not require cells specifically for the DC voltage blocking, the energy storage device of the present subject matter has lesser number of components than typical energy storage devices that are required to implement the DC voltage blocking. As a result, the cost of the energy storage device, the energization time of the energy storage element within the energy storage device, and the footprint associated with the energy storage device of the present subject matter are considerably less as compared to the typical energy storage devices. Even with lesser components, the energy storage device can adequately provide the inertia support without damaging during fault and/or disturbance scenarios in the AC power system. Further, the described energy storage device has cells which have same configuration. Thus, the modularity and redundancy of the energy storage device is advantageously high.

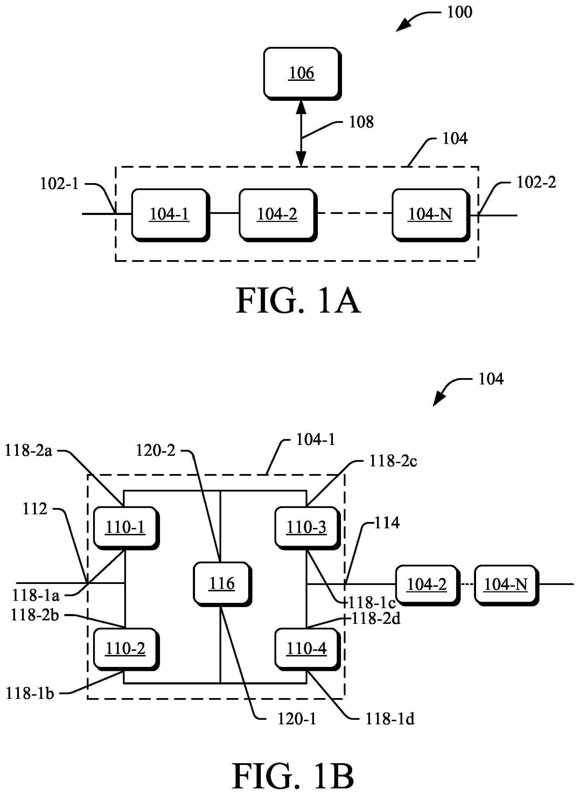

The present subject matter is further described with reference to FIG. 1 to FIG. 7. It should be noted that the description and figures merely illustrate principles of the present subject matter. Various arrangements may be devised that, although not explicitly described or shown herein, encompass the principles of the present subject matter. Moreover, all statements herein reciting principles, aspects, and examples of the present subject matter, as well as specific examples thereof, are intended to encompass equivalents thereof.

FIG. 1A illustrates a schematic representation of an energy storage device 100, according to an example. In an example, the energy storage device 100 may be used for supporting energy requirement in a high voltage direct current (HVDC) transmission system. Supporting the energy requirement may be understood to include providing inertia support to an alternating current (AC) power system within the HVDC transmission system during faults and/or disturbances in the AC power system. The AC power system may be any power system used for generation of power and/or consumption of power that is distributed through the HVDC transmission system.

In another example, the energy storage device 100 may be used for inserting voltage against fault current during a direct current (dc)-side fault event in the HVDC transmission system. The dc-side fault event may be defined as a fault scenario in which the fault current, which may be a large amount of current, flows towards a dc-side of the HVDC transmission system feeding the dc-side fault. In an example, the energy storage device 100 may be installed on the dc-side of the HVDC transmission system. Thus, during the dc-side fault event, the fault current may flow though the energy storage device 100. The energy storage device 100 may act as a resistance against the fault current and commutate the fault current to a main breaker. The fault current may then be damped and the dc-side fault may be disconnected.

In an example, the energy storage device 100 may comprise a first device end 102-1, a second device end 102-2, one or more cells 104-1, 104-2,..., 104-N, and a control unit 106. The first device end 102-1 may be electrically connectable in series to a first HVDC converter station of the HVDC transmission system. Further, the second device end 102-2 may be electrically connectable in series to a second HVDC converter station of the HVDC transmission system via an HVDC transmission line. The HVDC transmission line may be understood to include one or more transmission lines, one or more transmission cables, or a combination thereof to connect the first HVDC converter station and the second HVDC converter station to each other having the energy storage device 100 connected in series therebetween. In an example, one of the first device end 102-1 and the second device end 102-2 may act as an input of the energy storage device 100 while the other of the first device end 102-1 and the second device end 102-2 may act as an output of the energy storage device 100 based on the direction of current flowing between the first HVDC converter station and the second HVDC converter station.

The one or more cells 104-1, 104-2,..., 104-N may be individually referred to as cell 104 and collectively referred to as cells 104, where N is a natural number. The cells 104 may be electrically cascaded between the first device end 102-1 and the second device end 102-2. Further, the control unit 106 may be communicably coupled to the cells 104 to independently control an operating state of each cell 104. In an example, the control unit 106 may be communicably coupled to the cells 104 through a communication link 108. The communication link 108 may be a wireless link, a wired link, or a combination thereof.

FIG. 1B illustrates a schematic representation of the cell 104 of the energy storage device 100 of FIG. 1A, according to an example. For the sake of brevity and not as a limitation, configuration of only one cell, say, cell 104-1 has been illustrated in an expanded form in FIG. 1B. It should be understood to a person skilled in the art that each of the other cells 104-2 to 104-N may have a similar configuration as the cell 104-1.

In an example, each cell 104 may include one or more switch assemblies, a first cell input/output (I/O) end, a second cell I/O end, and an energy storage element. For instance, the cell 104-1 may include switch assemblies 110-1, 110-2, 110-3, and 110-4, a first cell I/O end 112, a second cell I/O end 114, and an energy storage element 116. The switch assemblies 110-1, 110-2, 110-3, and 110-4 may be individually referred to as switch assembly 110 and may be collectively referred to as switch assemblies 110. Similarly, each of the one or more cells 104-2,..., 104-N may comprise switch assemblies 110, first cell I/O ends 112, second cell I/O ends 114, and energy storage elements 116.

In one example, the switch assembly 110 may have a first end 118-1 and a second end 118-2. For instance, a first switch assembly 110-1 may have a first end 118-1a and a second end 118-2a; a second switch assembly 110-2 may have a first end 118-1b and a second end 118-2b; a third switch assembly 110-3 may have a first end 118-1c and a second end 118-2c; and a fourth switch assembly 110-4 may have a first end 118-1d and a second end 118-2d.

As depicted in FIG. 1B, the first cell I/O end 112 may be electrically connected to the first end 118-1a of the first switch assembly 110-1 and the second end 118-2b of the second switch assembly 110-2. Further, the second cell I/O end 114 may be electrically connected to the first end 118-1c of the third switch assembly 110-3 and the second end 118-2d of the fourth switch assembly 110-4. It should be understood to a person skilled in the art that the first cell I/O end 112 of a first cell 104-1 of the cells 104 may act as the first device end 102-1. Similarly, the second cell I/O end 114 of a last cell 104-N of the cells 104 may act as the second device end 102-2.

In an example, the energy storage element 116 may have a first element end 120-1 and a second element end 120-2. The first element end 120-1 may be electrically connected to the first end 118-1b of the second switch assembly 110-2 and the first end 118-1d of the fourth switch assembly 110-4. Further, the second element end 120-2 may be electrically connected to the second end 118-2a of the first switch assembly 110-1 and the second end 118-2c of the third switch assembly 110-3.

In an example, the control unit 106 of FIG. 1A may be communicably coupled to the switch assemblies 110 of the cells 104. The control unit 106 may be configured to independently control the switch assemblies 110 to control flow of current through the energy storage element 116.

In one example, the control unit 106 may control the switch assemblies 110 to prevent flow of current through the energy storage element 116 of the cell 104 during transmission of power between the first HVDC converter station and the second HVDC converter station in the HVDC transmission system. For instance, the flow of current through the energy storage element 116 of the cell 104 may be prevented when the energy storage element 116 is at least sufficiently or fully charged and when the cell is not needed for providing inertia support to the AC power system. For preventing flow of the current through the energy storage element 116, the control unit 106 may operate the switch assemblies 110 in a manner so that the current, between the first cell I/O end 112 and the second cell I/O end 114, either flows through a combination of the first switch assembly 110-1 and the third switch assembly 110-3 or through a combination of the second switch assembly 110-2 and the fourth switch assembly 110-4, thereby bypassing the energy storage element 116.

In another example, the control unit 106 may control the switch assemblies 110 to allow flow of current through the energy storage element 116 of the cell 104 during transmission of power between the first HVDC converter station and the second HVDC converter station in the HVDC transmission system. For instance, the flow of current through the energy storage element 116 of the cell 104 may be allowed to enable charging of the energy storage element 116 when the energy storage element 116 is at least not sufficiently or fully charged. In another instance, the flow of current through the energy storage element 116 of the cell 104 may be allowed to enable discharging of the energy storage element 116 for providing required inertia support during faults and/or disturbances within the AC power system.

For enabling charging of the energy storage element 116, the control unit 106 may operate the switch assemblies 110 in a manner so that the current follows a flow path including the energy storage element 116. The flow path of the current for energizing the energy storage element 116 may depend on the direction of power transmission between the first HVDC converter station and the second HVDC converter station. For energizing the energy storage element 116, the polarity of insertion of the energy storage element 116 should be in opposition to the direction of the current. Thus, for one direction of the power transmission, the flow path of the current between the first cell I/O end 112 and the second cell I/O end 114 may include the first switch assembly 110-1, the energy storage element 116, and the fourth switch assembly 110-4. For the other direction of the power transmission, the flow path of the current between the first cell I/O end 112 and the second cell I/O end 114 may include the second switch assembly 110-2, the energy storage element 116, and the third switch assembly 110-3.

For enabling discharging of the energy storage element 116 to provide the required inertia support during the faults and/or the disturbances within the AC power system, the control unit 106 may operate the switch assemblies 110 in a manner so that the current follows a flow path including the energy storage element 116. The flow path of the current for providing the inertia support through the energy storage element 116 may depend on the direction of power transmission between the first HVDC converter station and the second HVDC converter station. For providing the inertia support, the polarity of insertion of the energy storage element 116 should be in the direction of the current. Thus, for one direction of the power transmission, the flow path of the current between the first cell I/O end 112 and the second cell I/O end 114 may include the second switch assembly 110-2, the energy storage element 116, and the third switch assembly 110-3. For the other direction of the power transmission, the flow path of the current between the first cell I/O end 112 and the second cell I/O end 114 may include the first switch assembly 110-1, the energy storage element 116, and the fourth switch assembly 110-4.

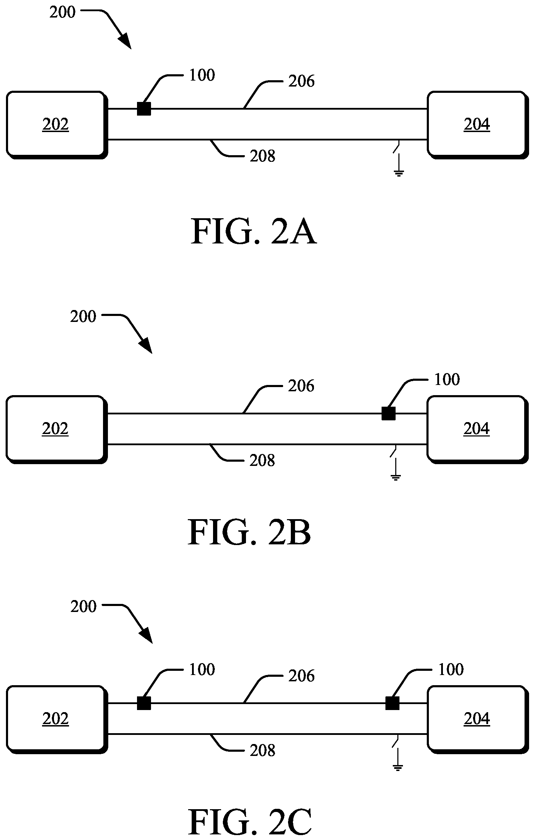

FIG. 2A, FIG. 2B, and FIG. 2C illustrate a HVDC transmission system 200 with different placements or positions of the energy storage device 100. The HVDC transmission system 200 comprises a first HVDC converter station 202, a second HVDC converter station 204, and the energy storage device 100. The second converter HVDC station 204 may be electrically connected to the first HVDC converter station 202 via the HVDC transmission line. The HVDC transmission line may include at least one pole 206 and a neutral line 208 for earth return. The pole 206 may be a negative pole or a positive pole. Although a single pole has been illustrated, it would be understood by a person skilled in the art that the HVDC transmission line may include two poles of oppositive polarities, i.e., a negative pole and a positive pole. The energy storage device 100 may be electrically connected in series between the first HVDC converter station 202 and the second HVDC converter station 204 via the HVDC transmission line. In an example, the energy storage device 100 may be installed on either poles on the dc-side of the HVDC transmission system. In an example, AC power systems may be connected on the ac-side of the first HVDC converter station 202 and the ac-side of the second HVDC converter station 204 for generation and/or consumption of power. The energy storage device 100 may provide energy support during faults and/or disturbances in the AC power systems.

In an example, during transmission of electrical energy from the first HVDC converter station 202 to the second HVDC converter station 204, the first HVDC converter station 202 may act as a rectifier and the second HVDC converter station 204 may act as an inverter. In said example, the energy storage device 100 may be connectable near the first HVDC converter station 202 and/or near the second HVDC converter station 204 for providing energy support to the second HVDC converter station 204 when required. The energy support may be required by the AC power systems connected on the ac-side of the second HVDC converter station 204 during the faults and/or disturbances.

In another example, during transmission of electrical energy from the second HVDC converter station 204 to the first HVDC converter station 202, the second HVDC converter station 204 may act as a rectifier and the first HVDC converter station 202 may act as an inverter. In said example, the energy storage device 100 may be connectable near the first HVDC converter station 202 and/or near the second HVDC converter station 204 for providing energy support to the first HVDC converter station 202 when required. The energy support may be required by the AC power systems connected on the ac-side of the first HVDC converter station 202 during the faults and/or disturbances.

FIG. 2A illustrates a first arrangement of the HVDC transmission system 200 having the energy storage device 100 placed according to a first example. In the first arrangement of the HVDC transmission system 200, the energy storage device 100 is connected near the first HVDC converter station 202.

FIG. 2B illustrates a second arrangement of the HVDC transmission system 200 having the energy storage device 100 placed according to a second example. In the second arrangement of the HVDC transmission system 200, the energy storage device 100 is connected near the second HVDC converter station 204.

FIG. 2C illustrates a third arrangement of the HVDC transmission system 200 having the energy storage device 100 placed according to a third example. In the third arrangement of the HVDC transmission system 200, one energy storage device 100 is connected near the first HVDC converter station 202 and another energy storage device 100 is connected near the second HVDC converter station 204.

The placement of the energy storage device 100 and the number of energy storage devices 100 to be installed in the HVDC transmission system may vary depending on the configuration of the HVDC transmission system and the energy support requirement of the HVDC transmission system during the faults and/or disturbances in the AC power systems.

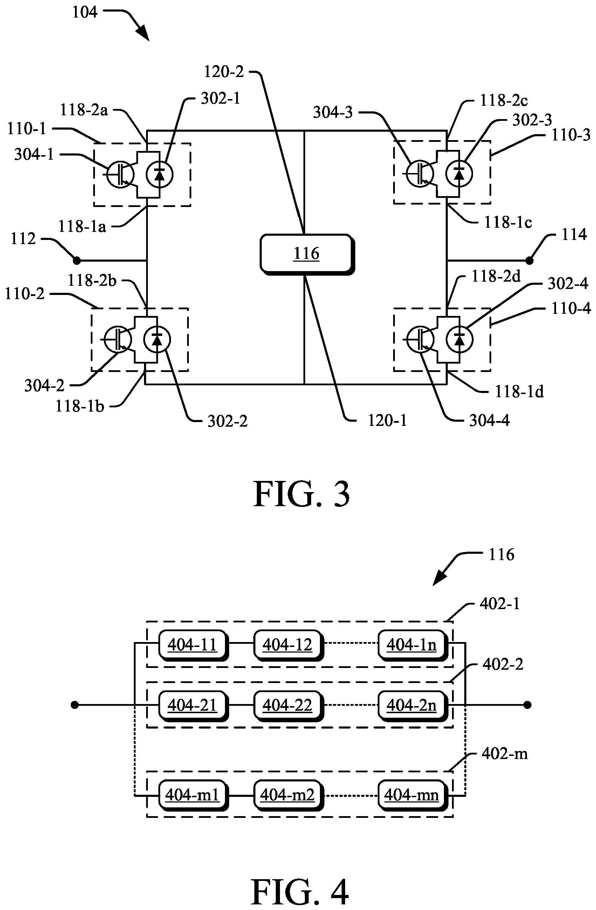

FIG. 3 illustrates a schematic representation of a cell 104 of the energy storage device 100, according to an example. The cell 104 comprises the switch assemblies 110, the first cell I/O end 112, the second cell I/O end 114, and the energy storage element 116.

In an example, each switch assembly 110-1, 110-2, 110-3, and 110-4 comprises a first one-directional switch 302-1, 302-2, 302-3, and 302-4, respectively, and a second one-directional switch 304-1, 304-2, 304-3, and 304-4, respectively. The first one-directional switches 302-1, 302-2, 302-3, and 302-4 may be generally referred to as the first one-directional switch 302. Further, the second one-directional switches 304-1, 304-2, 304-3, and 304-4 may be generally referred to as the second one-directional switch 304. As illustrated in FIG. 3, the first switch assembly 110-1 comprises the first one-directional switch 302-1 and the second one-directional switch 304-1. Similarly, the second switch assembly 110-2 comprises a first one-directional switch 302-2 and a second one-directional switch 304-2. The third switch assembly 110-3 comprises a first one-directional switch 302-3 and a second one-directional switch 304-3. Further, the fourth switch assembly 110-4 comprises a first one-directional switch 302-4 and a second one-directional switch 304-4.

In an example, the first one-directional switch 302 may allow flow of current in a first direction. For instance, the first one-directional switch 302-1, illustrated in FIG. 3, may allow flow of current from the first end 118-1a to the second end 118-2a. Similarly, the first one-directional switch 302-2 may allow flow of current from the first end 118-1b to the second end 118-2b. The first one-directional switch 302-3 may allow flow of current from the first end 118-1c to the second end 118-2c. Further, the first one-directional switch 302-4 may allow flow of current from the first end 118-1d to the second end 118-2d. In an example, the first one-directional switch 302 may be a diode.

In an example, the second one-directional switch 304 may be connected in parallel to the first one-directional switch 302. The second one-directional switch 304 may prevent flow of current in an open state. For instance, in the open state, the second one-directional switch 304-1, illustrated in FIG. 3, may prevent current to flow therethrough between the first end 118-1a and the second end 118-2a. Similarly, in the open state, the second one-directional switch 304-2 may prevent current to flow therethrough between the first end 118-1b and the second end 118-2b, the second one-directional switch 304-3 may prevent current to flow therethrough between the first end 118-1c and the second end 118-2c, and the second one-directional switch 304-4 may prevent current to flow therethrough between the first end 118-1d and the second end 118-2d. Further, the second one-directional switch 304 may allow flow of current in a second direction opposite to the first direction, in a closed state. For instance, in the closed state, the second one-directional switch 304-1 may allow flow of current from the second end 118-2a to the first end 118-1a. Similarly, in the closed state, the second one-directional switch 304-2 may allow flow of current from the second end 118-2b to the first end 118-1b, the second one-directional switch 304-3 may allow flow of current from the second end 118-2c to the first end 118-1c, and the second one-directional switch 304-4 may allow flow of current from the second end 118-2d to the first end 118-1d.

In an example, the second one-directional switch 304 may be a transistor. For instance, the second one-directional switch 304 may be an insulated gate bipolar transistor (IGBT). In said example, the control unit 106 may be communicably coupled to a gate terminal of the transistor. The control unit 106 may be configured to control an operating state of the second one-directional switch 304 by controlling an input for the gate terminal of the transistor. In an example, the operating state of the second one-directional switch 304 may be one of the open state and the closed state.

In an example, the control unit 106 may be configured to independently control the switch assemblies 110 to control flow of current through the energy storage element 116. For example, the control unit 106 may control the second one-directional switch 304 of the different switch assemblies 110 to control a flow path of the current between the first cell I/O end 112 and the second cell I/O end 114. By independently controlling the switch assemblies 110, the control unit 106 may be able to control an operating state of the cell 104. In an example, at a time, the operating state of the cell 104 may be one of an idle mode, an energy support mode, an energization mode, and a blocked state.

In the idle mode, the energy storage element 116 neither transmits any stored energy nor receives any energy for storage. In the energy support mode, the energy storage element 116 within the energy storage device 100 may transmit stored energy to the HVDC transmission system for providing inertia support to the AC power system. In the energization mode, the energy storage element 116 within the energy storage device may receive energy for charging from the HVDC transmission system. In the blocked state, the cell 104 may limit and commutate the fault current to a main breaker for isolating dc-fault during the dc-side fault event.

In an example, for operating the cell 104 in the idle mode, the control unit 106 may control the switch assemblies 110 to allow current to flow between the first cell I/O end 112 and the second cell I/O end 114 through one or more selected switches of the switch assemblies 110 bypassing the energy storage element 116. In an example, the cell 104 may be operated in the idle mode when the energy storage element 116 of the cell 104 is at least sufficiently or fully charged and when the cell 104 is not needed for providing inertia support to the AC power system within the HVDC transmission system.

For instance, during transmission of power from the first cell I/O end 112 to the second cell I/O end 114, the control unit 106 may operate at least the second one-directional switch 304-2 in the open state and the second one-directional switch 304-3 in the closed state so that the current naturally flows from the first one-directional switch 302-1 and the second one-directional switch 304-3 towards the second cell I/O end 114 bypassing the energy storage element 116. Alternatively, during transmission of power from the first cell I/O end 112 to the second cell I/O end 114, the control unit 106 may operate at least the second one-directional switch 304-2 in the closed state and the second one-directional switch 304-3 in the open state so that the current naturally flows from the second one-directional switch 304-2 and the first one-directional switch 302-4 towards the second cell I/O end 114 bypassing the energy storage element 116.

In an example, for operating the cell 104 in the idle mode, during transmission of power from the second cell I/O end 114 to the first cell I/O end 112, the control unit 106 may operate at least the second one-directional switch 304-4 in the open state and the second one-directional switch 304-1 in the closed state so that the current naturally flows from the first one-directional switch 302-3 and the second one-directional switch 304-1 towards the first cell I/O end 112 bypassing the energy storage element 116. Alternatively, during transmission of power from the second cell I/O end 114 to the first cell I/O end 112, the control unit 106 may operate at least the second one-directional switch 304-4 in the closed state and the second one-directional switch 304-1 in the open state so that the current naturally flows from the second one-directional switch 304-4 and the first one-directional switch 302-2 towards the first cell I/O end 112 bypassing the energy storage element 116.

For operating the cell 104 in the energy support mode, the control unit 106 may control the switch assemblies 110 to allow the energy storage element 116 to discharge and provide energy support. The control unit 106 may thus allow current to flow through the energy storage element 116 between the first cell I/O end 112 and the second cell I/O end 114. In an example, the cell 104 may be operated in the energy support mode in order to provide required inertia support during faults and/or disturbances in the AC power system.

In the energy support mode, the current may flow into the energy storage element 116 after passing through one of the switch assemblies 110. Further, the current may flow out of the energy storage element 116 towards another one of the switch assemblies 110 for discharging the energy storage element 116 and providing the energy support. This means that a flow path of the current, between the first cell I/O end 112 and the second cell I/O end 114, includes the energy storage element 116 and two switch assemblies 110 of the cell 104. The flow path of the current in the energy support mode may depend on the direction of power transmission between the first HVDC converter station and the second HVDC converter station. For operating the cell 104 in the energy support mode, the polarity of insertion of the energy storage element 116 should be in the direction of the current. Thus, for one direction of the power transmission, the flow path of the current between the first cell I/O end 112 and the second cell I/O end 114 may include the second one-directional switch 304-2 of the second switch assembly 110-2, the energy storage element 116, and the second one-directional switch 304-3 of the third switch assembly 110-3.

For the other direction of the power transmission, the flow path of the current between the first cell I/O end 112 and the second cell I/O end 114 may include the second one-directional switch 304-1 of the first switch assembly 110-1, the energy storage element 116, and the second one-directional switch 304-4 of the fourth switch assembly 110-4.

In an example, for operating the cell 104 in the energization mode, the control unit 106 may control the switch assemblies 110 to allow the energy storage element 116 to be charged by allowing current to flow through the energy storage element 116 between the first cell I/O end 112 and the second cell I/O end 114. In an example, the cell 104 may be operated in the energization mode when the energy storage element 116 is at least not sufficiently or fully charged.

In the energization mode, the current may flow into the energy storage element 116 after passing through one of the switch assemblies 110. Further, the current may flow out of the energy storage element 116 towards another one of the switch assemblies 110 for charging the energy storage element 116. This means that a flow path of the current, between the first cell I/O end 112 and the second cell I/O end 114, includes the energy storage element 116 and two switch assemblies 110. The flow path of the current in the energization mode may depend on the direction of power transmission between the first HVDC converter station and the second HVDC converter station. For operating the cell 104 in the energization mode, the polarity of insertion of the energy storage element 116 should be in opposition to the direction of the current. For one direction of the power transmission, the flow path of the current between the first cell I/O end 112 and the second cell I/O end 114 may include the first one-directional switch 302-1 of the first switch assembly 110-1, the energy storage element 116, and the first one-directional switch 302-4 of the fourth switch assembly 110-4.

For the other direction of the power transmission, the flow path of the current between the first cell I/O end 112 and the second cell I/O end 114 may include the first one-directional switch 302-2 of the second switch assembly 110-2, the energy storage element 116, and the first one-directional switch 302-3 of the third switch assembly 110-3.

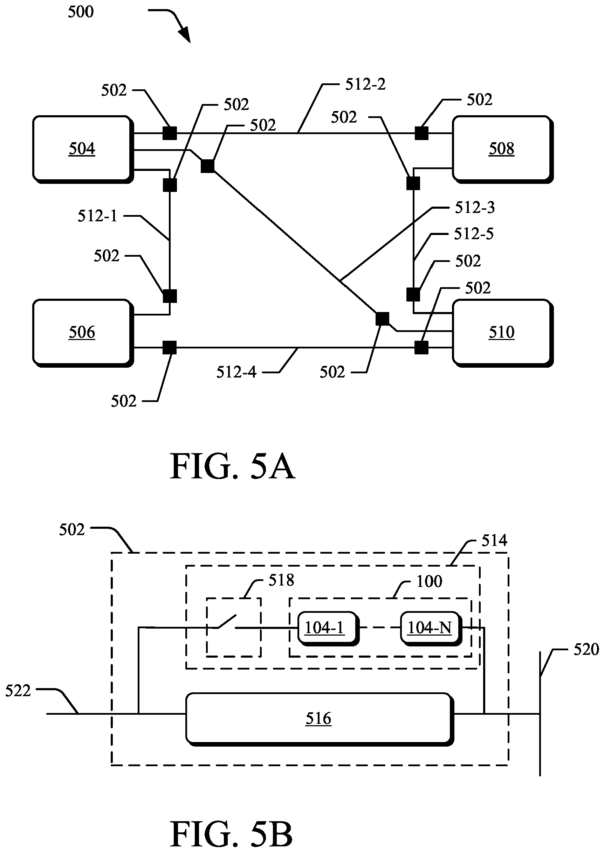

In an example, the cell 104 may operate in the blocked state during the dc-side fault event in the HVDC transmission system. For operating the cell 104 in the blocked state, the control unit 106 may control the switch assemblies to allow fault current to flow, between the first cell I/O end 112 and the second cell I/O end 114, through the energy storage element 116 and the first one-directional switch 302 of two switch assemblies of the switch assemblies 110. During the dc-side fault event, the control unit 106 may operate the second one-directional switch 304 of each switch assembly 110 of the switch assemblies 110 in the open state. Operating the second one-directional switch 304 in the open state prevents flow of current through the second one-directional switch 304, thereby preventing the second one-directional switch 304 from any damage due to the fault current. Thus, the fault current flows only through the first one-directional switch 302 of the switch assemblies 110, as a result of which the energy storage element 116 comes in the flow path of the fault current. The energy storage element 116 may limit and commutate the fault current to a main breaker in the blocked state. Operation of the cell 104 during the dc-side fault event has been further explained with reference to FIG. 5A to FIG. 5C.

FIG. 4 illustrates a schematic representation of the energy storage element 116 of the cell 104, according to an example. In an example, the energy storage element 116 may comprise a predetermined number of storage element strings 402-1, 402-2,..., 402-m, where m is a natural number. The predetermined number of storage element strings 402-1, 402-2,..., 402-m may be collectively referred to as the predetermined number of storage element strings 402 and individually referred to as the predetermined number of storage element string 402. The predetermined number of storage element strings 402 may be connected to each other in parallel. In an example, each storage element string 402 may comprise a pre-determined number of super-capacitors and/or batteries connected in series. For instance, the storage element string 402-1 comprises super-capacitors and/or batteries 404-11, 404-12,..., 404-1n. The super-capacitors and/or batteries 404-11, 404-12,..., 404-1n may be collectively referred to as the super-capacitors and/or batteries 404-1. Further, the storage element string 402-2 comprises super-capacitors and/or batteries 404-21, 404-22,..., 404-2n. The super-capacitors and/or batteries 404-21, 404-22,..., 404-2n may be collectively referred to as the super-capacitors and/or batteries 404-2. Furthermore, the storage element string 402-m comprises supercapacitors and/or batteries 404-m1, 404-m2,..., 404-mn. The super-capacitors and/or batteries 404-m1, 404-m2,..., 404-mn may be collectively referred to as the super-capacitors and/or batteries 404-m. The super-capacitors and/or batteries 404-11, 404-12,..., 404-1n, 404-21, 404-22,..., 404-2n, and 404-1n, 404-m1, 404-m2,..., 404-mn may be generally referred to as the super-capacitors and/or batteries 404.

In an example, the pre-determined number of the storage element strings 402 may be calculated based on a predefined current rating of the super-capacitors and/or batteries 404 and a predefined current rating requirement associated to the HVDC transmission system. The predefined current rating of the super-capacitors and/or batteries 404 may be based on the maximum current that the super-capacitors and/or batteries 404 may individually handle without damaging during steady state operation and/or during faults and/or during disturbances in the AC power system and the HVDC transmission system. The predefined current rating requirement may be based on the maximum current that the energy storage device 100 is required to handle without damaging during steady state operation and/or during faults and/or during disturbances in the AC power system and the HVDC transmission system.

In an example, the pre-determined number of super-capacitors and/or batteries 404 in the storage element string 402 may be calculated based on a predefined voltage rating of the super-capacitors and/or batteries 404, a predefined voltage rating requirement of the cell 104, and a predefined number of the cells 104 in the energy storage device 100. The pre-determined number of the cells 104 in the energy storage device 100 may be calculated based on a predefined voltage rating requirement associated with the HVDC transmission system. The predefined voltage rating of the super-capacitors and/or batteries 404 may be based on the maximum voltage the super-capacitors and/or batteries 404 can hold without damaging during steady state operation and/or during faults and/or during disturbances in the AC power system and the HVDC transmission system. The predefined voltage rating requirement associated with the HVDC transmission system may be based on the maximum inertia support that the energy storage device 100 is required to provide during faults and/or disturbances in the AC power system. The predefined voltage rating requirement of the cell 104 may depend on the predefined voltage rating requirement associated with the HVDC transmission system and the predefined number of the cells 104.

In an example, for the purpose of explanation of how the pre-determined number of the storage element strings 402 may be calculated and how the predetermined number of super-capacitors and/or batteries 404 in the storage element string 402 may be calculated, consider a 525 kV, 1000 MW HVDC transmission system. In an example, the predefined voltage rating requirement of the energy storage device 100 associated with the HVDC transmission system may be 10% of 525 kV considering the allowable range of operating dc-side voltage. Consider that a predefined voltage rating requirement for each cell 104 is 3 kV. Thus, the predetermined number of the cells 104 in the energy storage device 100 may be 52.5 kV divided by 3 kV which is approximately equal to 17. Thus, for such a HVDC transmission system, 17 cells may be cascaded to one another to form the energy storage device 100.

In the example, the predefined current rating requirement associated to the HVDC transmission system may be approximately 2 kA. If we consider a supercapacitor that has a predefined maximum current rating is 2693 A (for < 1sec time period) and continuous current rating, i.e., the predefined current rating of the supercapacitor is approximately 300A, then the pre-determined number of the storage element strings 402 may be 2kA divided by 300A which is approximately equal to 7. Thus, 7 strings may be connected in parallel to each other to form the energy storage element 116 and meet the current rating requirement associated with the HVDC transmission system.

In the example, consider that the predefined voltage rating of the supercapacitor is 102 V. Thus, the pre-determined number of super-capacitors 404 in the storage element string 402 may be 3 kV divided by 102 V which is approximately equal to 30. Hence, each storage element string 402 may be formed using 30 supercapacitors to meet the voltage rating requirement associated with the HVDC transmission system. In this example, each cell may comprise 30 multiplied by 7, i.e., 210 supercapacitors.

While a specific example of the pre-determined number of the storage element strings 402 and the pre-determined number of super-capacitors and/or batteries 404 has been described for ease in understanding of the present subject matter, any other pre-determined number of the storage element strings 402 and the pre-determined number of super-capacitors and/or batteries 404 may be used in the energy storage device 100 according to specific requirements of specific HVDC transmission system. The examples provided herewith are merely for the purpose of ease of understanding and are not intended to be construed as a limitation. Thus, the present subject matter is not limited to such examples.

FIG. 5A illustrates a schematic representation of a multiterminal HVDC transmission system 500 equipped with hybrid HVDC breakers 502, according to an example. The multiterminal HVDC transmission system 500 may hereinafter be alternatively referred to as the HVDC transmission system 500. In an example, a hybrid HVDC breaker 502 may be utilized for isolating dc-fault during a dc-side fault event. The dc-side fault event may be defined as a fault scenario in which the fault current, which may be a large amount of current, flows towards a dc-side of the HVDC transmission system feeding the dc-side fault. In an example, the hybrid HVDC breaker 502 may be installed on the dc-side of the HVDC transmission system 500.

In an example, the HVDC transmission system 500 may include HVDC converter stations 504, 506, 508, and 510. In an example, the HVDC converter stations 504, 506, 508, and 510 may be similar to the HVDC converter stations 202 and 204, explained with reference to FIG. 2A to FIG. 2C. In an example, one or more of the HVDC converter stations 504, 506, 508, and 510 may be connected to form a DC grid.

As illustrated in FIG. 5A, the HVDC converter stations 504 and 506 are electrically connected to each other via an HVDC transmission line 512-1. Similarly, the HVDC converter stations 504 and 508 are electrically connected to each other via an HVDC transmission line 512-2. Further, the HVDC converter stations 504 and 510 are electrically connected to each other via an HVDC transmission line 512-3. Furthermore, the HVDC converter stations 506 and 510 are electrically connected to each other via an HVDC transmission line 512-4. Moreover, the HVDC converter stations 506 and 510 are electrically connected to each other via an HVDC transmission line 512-5. Although, for illustration purposes, the HVDC transmission lines 512-1, 512-2, 512-3, 512-4, and 512-5 may have been illustrated using a single line, it should be understood that the HVDC transmission lines 512-1, 512-2, 512-3, 512-4, and 512-5 may include at least one pole and a neutral line for earth return. The at least one pole may be a negative pole or a positive pole. In an example, the HVDC transmission lines 512-1, 512-2, 512-3, 512-4, and 512-5 may include a single pole. In another example, the HVDC transmission lines 512-1, 512-2, 512-3, 512-4, and 512-5 may include two poles of opposite polarities, i.e., a negative pole and a positive pole.

In an example, the hybrid HVDC breaker 502 may be connected in series between a first HVDC converter station and a second HVDC converter station via an HVDC transmission line. In an example, the hybrid HVDC breaker 502 may be connected in series between the first HVDC converter station and the second HVDC converter station via the negative pole or the positive pole of the HVDC transmission line. As depicted in FIG. 4, two hybrid HVDC breakers 502, one near the HVDC converter station 504 and the other near the HVDC converter station 506, are connected in series between the HVDC converter stations 504 and 506 via the HVDC transmission line 512-1. Similarly, two hybrid HVDC breakers 502, one near the HVDC converter station 504 and the other near the HVDC converter station 508, are connected in series between the HVDC converter stations 504 and 508 via the HVDC transmission line 512-2. Similarly, two hybrid HVDC breakers 502 have been illustrated on each of the HVDC transmission lines 512-3, 512-4, and 512-5.

Although two hybrid HVDC breakers 502 have been illustrated on each of the HVDC transmission lines 512-1, 512-2, 512-3, 512-4, and 512-5, it should be understood to the person skilled in the art that the number of hybrid HVDC breakers 502 on each HVDC transmission lines 512-1, 512-2, 512-3, 512-4, and 512-5 may be equal to or greater than 1.

FIG. 5B illustrates a schematic representation of the hybrid HVDC breaker 502, according to an example. In an example, the hybrid HVDC breaker 502 may comprise a current control assembly 514 and a main breaker 516. The main breaker 516 may be connected in parallel to the current control assembly 514. The current control assembly 514 may comprise the energy storage device 100. For the sake of explanation, only the cells 104 of the energy storage device 100 have been illustrated in FIG. 5B. It should be understood to a person skilled in the art that the control unit 106 of the energy storage device 100 may control the cells 104 as explained with reference to FIG. 1A, FIG. 1B, and FIG. 3.

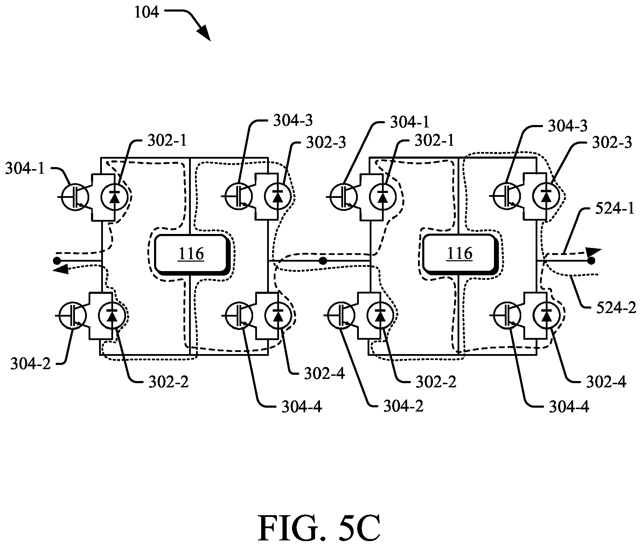

In an example, the current control assembly 514 may further comprise an ultra-fast disconnector 518. The ultra-fast disconnector 518 may be connected in series to the energy storage device 100, specifically the cells 104 of the energy storage device 100. As depicted in FIG. 5, one end of the hybrid HVDC breaker 502 may be connected to a first HVDC converter station 520 and the other end may be connected to a second HVDC converter station (no illustrated) via the HVDC transmission line 522.

During normal energy transmission operation, the ultra-fast disconnector 518 may operate in a closed state. Further, the energy storage device 100 may operate in an idle mode to allow current to flow between the first HVDC converter station 520 and the second HVDC converter station through the current control assembly 514 and the HVDC transmission line 522.

During the dc-side fault event in the HVDC transmission system 500, for a predefined time period after initiation of the dc-side fault event, the ultra-fast disconnector 518 may operate in the closed state. Further, the energy storage device 100 may operate in a blocked state for inserting voltage against fault current to commutate the fault current from the current control assembly 514 to the main breaker 516. During the dc-side fault event in the HVDC transmission system 500, when the fault current flowing through the current control assembly 514 becomes zero, after the predefined time period, the ultra-fast disconnector 518 switches from the closed state to an open state.

The energy storage device 100 always opposes the current flow in the blocked state and hence, offers higher impedance path for the fault current. Therefore, the complete fault current naturally commutates to the main breaker 516, allowing the ultra-fast disconnector 518 to switch from the closed state to an open state. The fault current may then be damped and the fault may be disconnected.

FIG. 5C illustrates a schematic representation of flow of fault current 524-1 and 524-2 through the cells 104 within the hybrid HVDC breaker 502 during the dc-side fault event, according to an example. Specifically, FIG. 5C illustrates flow of the fault current prior to the predefined time period when the fault current flowing through the current control assembly 514 is not zero.

During the dc-side fault event in the HVDC transmission system, the fault current flows to the dc side feeding the dc-side fault. To protect the HVDC converter stations, the HVDC converter stations are blocked and AC side breakers are opened. However, as the energy storage device 100 is connected on the dc-side, until the AC side breakers are opened, the fault current 524-1 or 524-2 flows through the energy storage device. During the dc-side fault event, the cells 104 are operated in the blocked state. This means that the second one-directional switches 304 are operated in the open state to protect the second one-directional switches 304 from damaging due to the fault current 524-1 or 524-2. Thus, the fault current 524-1 or 524-2 flows only through the first one-directional switch 302, as a result of which the energy storage element 116 comes in the flow path of the fault current 524-1 or 524-2.

As illustrated, the fault current 524-1 flows in a first direction through the energy storage element 116 and the first one-directional switches 302-1 and 302-4 of the cells 104. Further, the fault current 524-1 flows in a second direction, opposite to the first direction, through the energy storage element 116 and the first one-directional switches 302-2 and 302-3 of the cells 104. Since the fault current 524-1 or 524-2 flows through the energy storage device 100, voltage across the energy storage element 116 of the cells 104 rises leading to natural commutation of the fault current 524-1 or 524-2 to the main breaker 516, allowing the ultra-fast disconnector 518 to switch from the closed state to the open state.

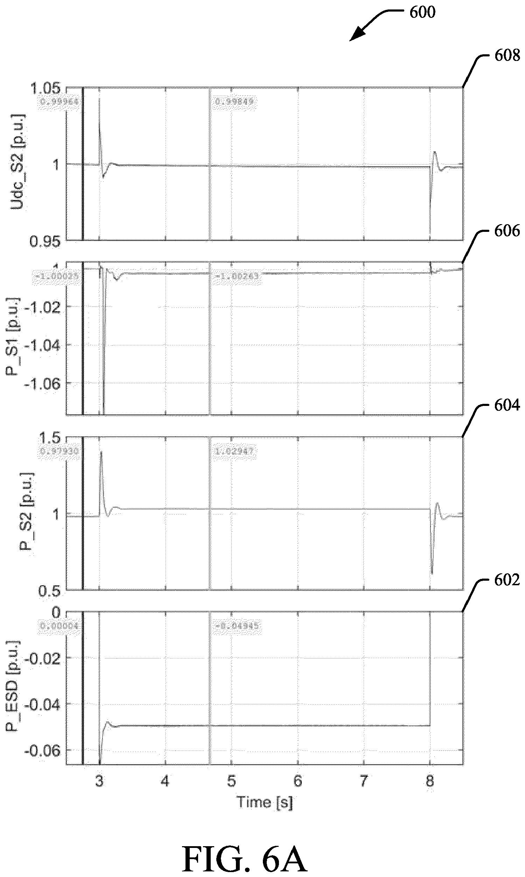

FIG. 6A illustrates exemplary simulation results 600 indicating performance of the energy storage device 100 in the HVDC transmission system 200 of FIG. 2A during transmission of power from the first HVDC converter station 202 to the second HVDC converter station 204, according to an example.

The exemplary simulation results 600 include graphs 602, 604, 606, and 608. X-axis of the graphs 602, 604, 606, and 608 denotes time in seconds. Y-axis of the graph 602 denotes the amount of power (P_ESD) transferred through the energy storage device 100 in per-unit (p.u.) system. Y-axis of the graph 604 denotes the amount of power (P_S2) received at the second HVDC converter station 204 in p.u. system. Y-axis of the graph 606 denotes the amount of power (P_S1) transferred from the first HVDC converter station 202 in p.u. system. Y-axis of the graph 608 denotes the pole voltage (Udc_S2) of the HVDC transmission system 200 in p.u. system.

In the simulation results 600, the power reference of the first HVDC converter station 202 is set to -1 p.u., which means that the power is being transmitted from the first HVDC converter station 202 to the second HVDC converter station 204. It can be seen from graph 606 that the active power at the first HVDC converter station 202 is 1 p.u. Further, it can be seen from graph 604 that the active power at the second HVDC converter station 204 is slightly lesser than 1 p.u., but is close to 1 p.u. The slight reduction in the active power at the second HVDC converter station 204 is due to the losses in the HVDC transmission line.

At time t = 3 sec, the energy support mode of the energy storage device 100 is enabled in to provide inertia support to the second HVDC converter station 204. Accordingly, P_ESD in the graph 602 has changed at time t = 3 sec. The inertia support may be enabled due to faults and/or disturbances in the AC power system. As soon as the inertia support is enabled at time t = 3 sec, the power at the second HVDC converter station 204 increases by 5% as can be seen in graph 604. However, the power at the first HVDC converter station 202 is undisturbed and this additional 5% power is drawn from the energy storage device 100 in the HVDC transmission system 200. Further, the pole voltage in graph 608 also remains undisturbed. Therefore, it proves that the energy storage device 100 can provide inertia support to the AC power system in the HVDC transmission system through the HVDC converters. Once the inertia support requirement is over at time t = 8 sec, the energy support mode of the energy storage device 100 is disabled and the power is restored to nominal value at the second HVDC converter station 204.

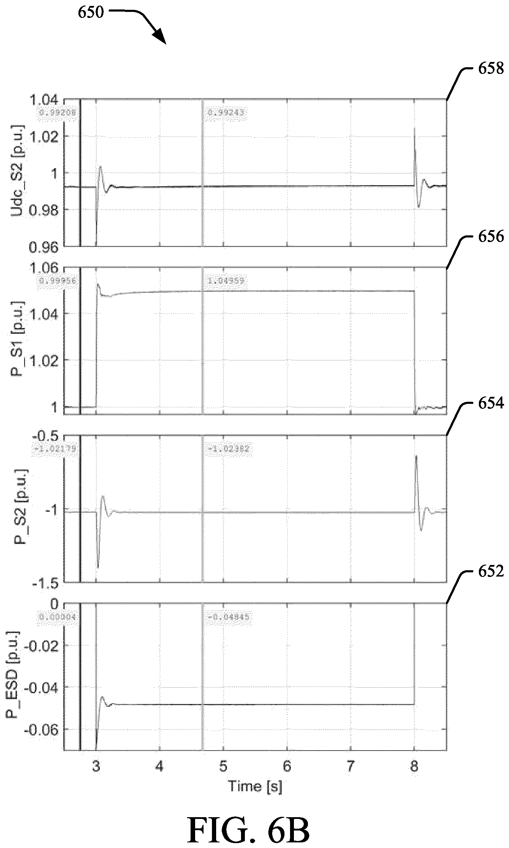

FIG. 6B illustrates exemplary simulation results 650 indicating performance of the energy storage device 100 in the HVDC transmission system 200 of FIG. 2A during transmission of power from the second HVDC converter station 204 to the first HVDC converter station 202, according to an example.

The exemplary simulation results 650 include graphs 652, 654, 656, and 658. X-axis of the graphs 652, 654, 656, and 658 denotes time in seconds. Y-axis of the graph 652 denotes the amount of power (P_ESD) transferred through the energy storage device 100 in per-unit (p.u.) system. Y-axis of the graph 654 denotes the amount of power (P_S2) transferred from the second HVDC converter station 204 in p.u. system. Y-axis of the graph 656 denotes the amount of power (P_S1) received at the first HVDC converter station 202 in p.u. system. Y-axis of the graph 658 denotes the pole voltage (Udc_S2) of the HVDC transmission system 200 in p.u. system.

In the simulation results 650, the power reference of the first HVDC converter station 202 is set to 1 p.u., which means that the power is being transmitted from the second HVDC converter station 204 to the first HVDC converter station 202. It can be seen from graph 656 that the active power at the first HVDC converter station 202 is 1 p.u. Further, it can be seen from graph 654 that the active power at the second HVDC converter station 204 is slightly greater than 1 p.u., but is close to 1 p.u. The slight variation in the active power at the second HVDC converter station 204 is due to the losses in the HVDC transmission line.

At time t = 3 sec, the energy support mode of the energy storage device 100 is enabled in to provide inertia support to the first HVDC converter station 202. Accordingly, P_ESD in the graph 652 has changed at time t = 3 sec. The inertia support may be enabled due to faults and/or disturbances in the AC power system. As soon as the inertia support is enabled at time t = 3 sec, the power at the first HVDC converter station 202 increases by 5% as can be seen in the graph 656. However, the power at the second HVDC converter station 204 is undisturbed and this additional 5% power is drawn from the energy storage device 100 in the HVDC transmission system 200. Further, the pole voltage in graph 608 also remains undisturbed. Therefore, it further proves that the energy storage device 100 can provide inertia support to the AC power system in the HVDC transmission system through the HVDC converters. Moreover, even if the direction of power transfer between the HVDC converter stations changes, same energy storage device 100 may used to provide the inertia support wherever required. This means that the energy storage device 100 is not required to be replaced at a different position even if the direction of power transfer between the HVDC converter stations changes. Once the inertia support requirement is over at time t = 8 sec, the energy support mode of the energy storage device 100 is disabled and the power is restored to nominal value at the second HVDC converter station 204.

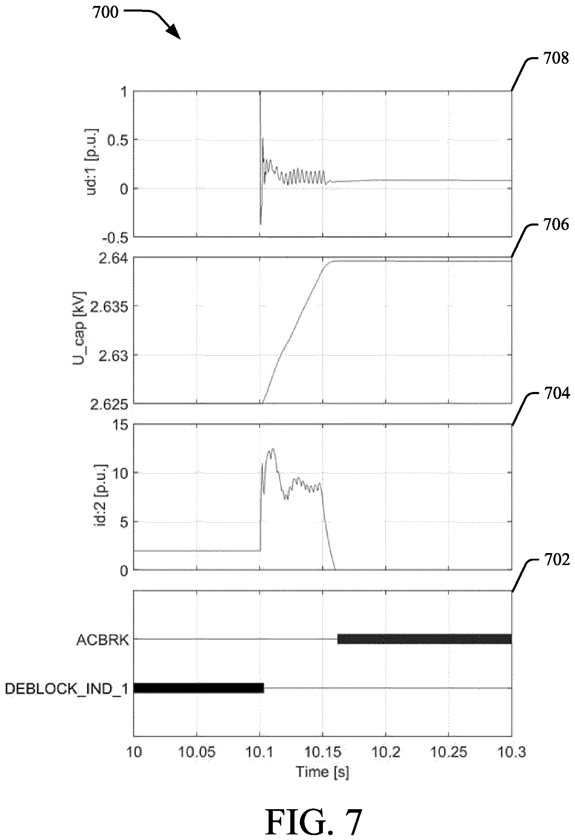

FIG. 7 illustrates exemplary simulation results 700 indicating performance of the energy storage device 100 as a part of the hybrid HVDC breaker 502 in the HVDC transmission system 500, explained with reference to FIG. 5A to FIG. 5C, during the dc-side fault event, according to an example. The exemplary simulation results 700 have been generated for the 525 kV, 1000 MW HVDC transmission system described in the foregoing description.

The exemplary simulation results 700 include graphs 702, 704, 706, and 708. X-axis of the graphs 702, 704, 706, and 708 denotes time in seconds. Y-axis of the graph 702 denotes activation status of a DEBLOCK_IND_1 signal and an ACBRK signal. The DEBLOCK_IND_1 signal indicates whether the main converters of the HVDC transmission system are blocked or not. The ACBRK signal indicates whether the AC side breakers are opened or not. Y-axis of the graph 704 denotes the amount of current (id:2) flowing the energy storage device in p.u. system. Y-axis of the graph 706 denotes the voltage (U_cap) across the energy storage device in kilo volts (kV). Y-axis of the graph 708 denotes the pole voltage (ud:1) of the HVDC transmission system in p.u. system.

For the exemplary simulation results 700, a dc-side fault event is simulated at time t = 10.1 sec on the HVDC transmission line to identify the maximum amount of current that flows though the energy storage device 100 during the dc-side fault. Shortly after starting of the dc-side fault event, the main converters are blocked as can be seen in the graph 702 through the DEBLOCK_IND_1 signal. As can be seen in the graph 704, a large amount of the fault current starts to flow through the energy storage device 100 after time t = 10.1 sec until AC side breakers are opened at approximately time t = 10.16 sec. The ACBRK signal in graph 702 shows that AC side breakers are opened at approximately time t = 10.16 sec. Thus, until the AC side breakers are opened the energy storage device 100 should be able to withstand the fault current. It can be seen from the graph 704 that the maximum current through the energy storage device 100 is around 13 kA which is approximately 7 times the rated current during steady state operation. Further, it can be seen from the graph 706 that, during the dc-side fault event, the change in voltage is around 30V which is approximately 1% greater than the voltage during the steady state operation. The change in the voltage is negligibly small and hence, such change in voltage can be neglected. However, the current is increased by 7 times during the dc-side fault event. However, the surge in the current has lasted only for few tens of milli seconds. As mentioned earlier for the 525 kV, 1000 MW HVDC transmission system, the predefined maximum current rating of the supercapacitors of the energy storage device 100 for shorter durations (~1 sec) is significantly higher than the continuous current rating of the supercapacitors. For the considered supercapacitor, the short time current rating is 2693 A and the continuous current rating is 300 A. In the considered energy storage device, since seven strings of super capacitors are connected in parallel, the current rating of the energy storage element of the cell would be 19.6 kA for short duration. As the current during the dc-side fault in the graph 704 is less than the total current rating of the energy storage element, the energy storage element can withstand the fault current without any damage. Hence, the energy storage device 100 does not require any specific design changes for handling the dc-side faults.

The exemplary simulation results have been described herein only for the explanation of the present subject matter. The exemplary simulation results should not be construed as a limitation of the present subject matter.

While this detailed description has disclosed certain specific exemplary embodiments for illustrative purposes, various modifications will be apparent to those skilled in the art, and it is to be distinctly understood that the foregoing descriptive matter is to be interpreted merely as illustrative of the invention and not as a limitation.

## Claims

1. An energy storage device (100) for supporting energy requirement in a high voltage direct current (HVDC) transmission system (200, 500), wherein the energy storage device (100) comprises:
a first device end (102-1) electrically connectable in series to a first HVDC converter station of the HVDC transmission system (200, 500);
a second device end (102-2) electrically connectable in series to a second HVDC converter station of the HVDC transmission system (200, 500) via an HVDC transmission line;
one or more cells (104) electrically cascaded between the first device end (102-1) and the second device end (102-2), wherein each cell (104) of the one or more cells (104) comprises:
switch assemblies (110) arranged in a full-bridge configuration;
a first cell input/output (I/O) end (112) electrically connected to a first end (118-1a) of a first switch assembly (110-1) of the switch assemblies (110) and a second end (118-2b) of a second switch assembly (110-2) of the switch assemblies (110);
a second cell I/O end (114) electrically connected to a first end (118-1c) of a third switch assembly (110-3) of the switch assemblies (110) and a second end (118-2d) of a fourth switch assembly (110-4) of the switch assemblies (110); and
an energy storage element (116) having a first element end (120-1) and a second element end (120-2), wherein the first element end (120-1) is electrically connected to a first end (118-1b) of the second switch assembly (110-2) and a first end (118-1d) of the fourth switch assembly (110-4), and wherein the second element end (120-2) is electrically connected to a second end (118-2a) of the first switch assembly (110-1) and a second end (118-2c) of the third switch assembly (110-3); and
a control unit (106) configured to independently control the switch assemblies (110) to control flow of current through the energy storage element (116).

2. The energy storage device (100) of claim 1, wherein the energy storage element (116) comprises a predetermined number of storage element strings (402) connected to each other in parallel, and wherein each storage element string (402) comprises a pre-determined number of super-capacitors and/or batteries (404) connected in series.

3. The energy storage device (100) of claim 2, wherein the pre-determined number of the storage element strings (402) is calculated based on a predefined current rating of the super-capacitors and/or batteries (404) and a predefined current rating requirement associated to the HVDC transmission system (200, 500).

4. The energy storage device (100) of one of claims 2 and 3, wherein the predetermined number of super-capacitors and/or batteries (404) in the storage element string (402) is calculated based on a predefined voltage rating of the supercapacitors and/or batteries (404), a predefined voltage rating requirement of the cell (104), and a predefined number of the one or more cells (104) in the energy storage device (100), wherein the pre-determined number of the one or more cells (104) in the energy storage device (100) is calculated based on a predefined voltage rating requirement associated with the HVDC transmission system (200, 500).

5. The energy storage device (100) of one of claims 1 to 4, wherein each switch assembly (110) comprises:
a first one-directional switch (302) to allow flow of current in a first direction; and
a second one-directional switch (304) connected in parallel to the first one-directional switch (302), wherein the second one-directional switch (304) is to:
prevent flow of current in an open state; and
allow flow of current in a second direction opposite to the first direction, in a closed state.

6. The energy storage device (100) of claim 5, wherein the first one-directional switch (302) is a diode, and wherein the second one-directional switch (304) is a transistor.

7. The energy storage device (100) of one of claims 1 to 6, wherein, for operating the cell (104) in an idle mode, the control unit (106) is to control the switch assemblies (110) to allow current to flow between the first cell I/O end (112) and the second cell I/O end (114) through one or more selected switches (302, 304) of the switch assemblies (110) bypassing the energy storage element (116).

8. The energy storage device (100) of one of claims 1 to 7, wherein, for operating the cell (104) in an energy support mode, the control unit (106) is to control the switch assemblies (110) to allow the energy storage element (116) to discharge and provide energy support by allowing current to flow through the energy storage element (116) between the first cell I/O end (112) and the second cell I/O end (114), wherein the current is to flow into the energy storage element (116) after passing through one of the switch assemblies (110), and wherein the current is to flow out of the energy storage element (116) towards another one of the switch assemblies (110).

9. The energy storage device (100) of one of claims 1 to 8, wherein, for operating the cell (104) in an energization mode, the control unit (106) is to control the switch assemblies (110) to allow the energy storage element (116) to charge by allowing current to flow through the energy storage element (116) between the first cell I/O end (112) and the second cell I/O end (114), wherein the current is to flow into the energy storage element (116) after passing through one of the switch assemblies (110), and wherein the current is to flow out of the energy storage element (116) towards another one of the switch assemblies (110).

10. The energy storage device (100) of one of claims 5 and 6, wherein the cell (104) is to operate in a blocked state during a dc-side fault event in the HVDC transmission system (200, 500), wherein, for operating the cell (104) in the blocked state, the control unit (106) is to control the switch assemblies (110) to allow fault current to flow, between the first cell I/O end (112) and the second cell I/O end (114), through the energy storage element (116) and the first one-directional switch (302) of two switch assemblies (110) of the switch assemblies (110), wherein the energy storage element (116) limits and commutates the fault current to a main breaker (516) in the blocked state.

11. The energy storage device (100) of claim 10, wherein, for operating the cell (104) in the blocked state, the control unit (106) is to operate the second one-directional switch (304) of each switch assembly (110) of the switch assemblies (110) in the open state.

12. A high voltage direct current (HVDC) transmission system (200, 500) comprising:
a first HVDC converter station;
a second HVDC converter station electrically connected to the first HVDC converter station via an HVDC transmission line; and
the energy storage device (100) of one of claims 1 to 11, wherein the energy storage device (100) is electrically connected in series between the first HVDC converter station and the second HVDC converter station via the HVDC transmission line.

13. The HVDC transmission system (200, 500) of claim 12, wherein during transmission of electrical energy from the first HVDC converter station to the second HVDC converter station:
the first HVDC converter station acts as a rectifier and the second HVDC converter station acts as an inverter; and
the energy storage device (100) is connectable near the first HVDC converter station and/or near the second HVDC converter station for providing energy support to the second HVDC converter station when required.

14. The HVDC transmission system (200, 500) of claim 12, wherein during transmission of electrical energy from the second HVDC converter station to the first HVDC converter station:
the second HVDC converter station acts as a rectifier and the first HVDC converter station acts as an inverter; and
the energy storage device (100) is connectable near the first HVDC converter station and/or near the second HVDC converter station for providing energy support to the first HVDC converter station when required.

15. A high voltage direct current (HVDC) transmission system (200, 500) comprising:
a hybrid HVDC breaker (502) electrically connected in series between a first HVDC converter station and a second HVDC converter station via an HVDC transmission line, wherein the hybrid HVDC breaker (502) comprises:
a current control assembly (514) comprising:
the energy storage device (100) of one of claims 1 to 11; and
an ultra-fast disconnector (518) electrically connected in series to the energy storage device (100); and
a main breaker (516) connected in parallel to the current control assembly (514),
wherein during normal energy transmission operation:
the ultra-fast disconnector (518) operates in a closed state and the energy storage device (100) operates in an idle mode to allow current to flow between the first HVDC converter station and the second HVDC converter station though the current control assembly (514) and the HVDC transmission line; and
wherein during a dc-side fault event in the HVDC transmission system (200, 500):
for a predefined time period after initiation of the dc-side fault event, the ultra-fast disconnector (518) operates in the closed state and the energy storage device (100) operates in a blocked state for inserting voltage against fault current to commutate the fault current from the current control assembly (514) to the main breaker (516); and
when the fault current flowing through the current control assembly (514) becomes zero, after the predefined time period, the ultra-fast disconnector (518) switches from the closed state to an open state.
